# EUROPEAN PATENT SPECIFICATION

(11) **EP 4 317 724 B1**
(45) Date of publication and mention of the grant of the patent: **19.08.2026**
(21) Application number: 22775731.7
(22) Date of filing: 23.03.2022
(51) Int. Cl.: F16C 29/06

(54) **LINEAR GUIDE**
LINEARFÜHRUNG
GUIDE LINÉAIRE

(30) Priority: 26.03.2021 JP 2021053614
(43) Date of publication of application: 07.02.2024
(73) Proprietor: NSK Ltd., Tokyo 141-8560 (JP)
(72) Inventor: NAKANO Kenta, Tokyo 141-8560 (JP); WADA Atsushi, Tokyo 141-8560 (JP)
(74) Representative: Grünecker Patent- und Rechtsanwälte PartG mbB
(86) International application number: PCT/JP2022/013765
(87) International publication number: WO 2022/202949

(56) References cited:
- WO-A1-2012/074066
- JP-A- 2004 108 474
- JP-A- 2008 281 096
- JP-A- 2008 281 096
- JP-A- 2013 050 206
- JP-A- H1 172 119
- JP-B2- 5 872 398
- JP-U- 3 226 315

## Description

### TECHNICAL FIELD

The present invention relates to a linear guide, and more particularly to a linear guide using a ball as a rolling element. A linear guide according to the preamble of claim 1 is known, for example, from JP 2008 281096 A or JP 5 872398 B2.

### BACKGROUND ART

For example, a linear guide used in a machine tool or the like generally includes a guide rail provided with rail-side rolling grooves on left and right sides, a slider provided with slider-side rolling grooves at positions facing the rail-side rolling grooves of the guide rail, and balls, which are a large number of rolling elements that are filled in a load rolling path configured by the rail-side rolling grooves and the slider-side rolling grooves and a ball return path (hereinafter also referred to as "return hole") that is a hole provided inside a slider, and that can roll on the rolling paths. End caps are attached to both ends of the slider in an axial direction, and a direction changing path that changes a direction of the balls is formed in the end caps. As the balls roll on the rolling path, the slider moves axially relative to the guide rail. After rolling on the rolling path, the balls return to the original position through the return hole formed in the slider after changing the direction in the end caps.

In the linear guide configured as described above, operating performance of the slider, which indicates dynamic frictional force fluctuations, and vibration performance of the slider are greatly affected by the direction changing path, so various improvements have been made until now.

For example, in Patent Literature 1 and 2, a smoothly inclined chamfer (straight line portion) is provided on a direction changing path at an entrance/exit portion where balls enter a load zone. In Patent Literature 3, a chamfer is provided at an entrance/exit portion of an inner peripheral surface of a direction changing path, and an elongated member is provided to guide balls to the inside of a slider.

According to Patent Literatures 1 to 3, chamfering can reduce play of the ball between a direction changing path and a load rolling path at the entrance/exit portion, so it is possible to reduce vibration caused by collision of the ball with a rail. However, at a connection point between the chamfer with a straight line shape and a curved surface inside the direction changing path, the ball itself is forced to change from a simple circular arc motion to a linear motion, so the motion of the ball becomes unstable and there is a possibility of lowering the operating performance.

In Patent Literatures 4 and 5, a direction changing path is configured by multiple arcs. This is because movement of rolling balls is likely to be unstable at an entrance/exit portion, so it is possible to make an optimal design by using a gentle curved surface shape and reducing a curvature of the curved surface shape at a location where the movement of the balls is likely to be stable. As a result, improvement in operating performance is expected. However, since play of the ball between the direction changing path and a load rolling path cannot be reduced, vibration caused by collision of the ball with a rail may become a problem.

In the linear guide of the related art, a cross-sectional shape of a return hole and a cross-sectional shape of a load rolling path are substantially the same single circle. In Patent Literatures 1 to 3, since chamfering is provided at an entrance/exit portion, only the entrance/exit portion does not have the same shape as the return hole, but a portion before the chamfering is formed in the same single circle as the return hole. The return hole connecting to the direction changing path is formed by drilling to a metal part. Here, a ratio (L/d) between a machinable length L and a hole diameter d is about 25 to 50. Even when drilling can be performed, it is necessary to secure a certain degree of straightness for the return hole.

### CITATION LIST

### PATENT LITERATURE

Patent Literature 1: JP2000-304045A
Patent Literature 2: JP2001-182745A
Patent Literature 3: JP2018-71592A
Patent Literature 4: JP3143604B
Patent Literature 5: JPH05-26043B

### SUMMARY OF INVENTION

### TECHNICAL PROBLEM

By the way, as a recent trend, a long slider is required to improve accuracy of a linear guide or to improve rigidity. When machining a return hole in a long slider with high accuracy, it is advantageous to make a return hole diameter as large as possible. However, when a direction changing path with a large hole diameter is formed to match the return hole, play of a ball in a circulation path near an entrance/exit portion increases, causing the ball to run wild and become unstable in the circulation path. As a result, operation/vibration performance deteriorates. There is a possibility that the ball will collide with a land portion of a rolling groove of the slider and a rail. Since the land portion of the rolling groove has a convex shape, a stress in a contact portion at the time of ball collision is high, and fatigue fracture may occur from the portion.

Patent Literatures 1 to 5 assume that hole diameters of the return hole and the load rolling path are the same, and do not consider the problem described above. In the linear guide of the related art, the hole diameter of the return hole must be set within a range where the ball does not collide with the land portion of a ball groove so that play of the ball in the circulation path at the entrance/exit portion is not large. Therefore, it is becoming difficult to meet demands of recent long sliders. When it is necessary to increase a hole diameter of a return hole because a slider is long or straightness of a return hole cannot be secured, in some cases, a resin pipe is inserted after machining a return hole, but there is a problem that the number of parts increases and assembly becomes complicated.

The present invention is made with a focus on the problem described above, and an object of the present invention is to provide a linear guide capable of maintaining stable operating performance while maximizing a hole diameter of a return hole.

### SOLUTION TO PROBLEM

Therefore, the above-described object of the present invention is achieved by the linear guide as defined in the appended claims.

### ADVANTAGEOUS EFFECTS OF INVENTION

According to the linear guide of the present invention, in the inner concave groove defining the inner peripheral surface of the direction changing path, the rail-side opening portion and the return path-side opening portion have different cross-sectional shapes on the plane perpendicular to the central axis of the direction changing path, and the cross-sectional shape in the plane along the central axis of the direction changing path is smoothly continuous with a single arc or a plurality of arcs. Therefore, stable operating performance can be maintained while maximizing the hole diameter of the ball return path.

### BRIEF DESCRIPTION OF DRAWINGS

Fig. 1 is a perspective view illustrating a linear guide according to an embodiment of the present invention.
Fig. 2 is a schematic top view illustrating the linear guide illustrated in Fig. 1 with a part of a top surface cut.
Fig. 3 is a perspective view of an end cap to which a return guide is attached.
Fig. 4 is an exploded perspective view of the end cap and the return guide.
Fig. 5 is a perspective view of the return guide.
Fig. 6A is a partial side view illustrating inner concave grooves of a rail-side opening portion and a return path-side opening portion of the return guide, and Fig. 6B is a cross-sectional view taken along a line VI-VI of Fig. 6A.
Fig. 7A is a partial side view illustrating inner concave grooves of a rail-side opening portion and a return path-side opening portion of a return guide of a first modification example, and Fig. 7B is a cross-sectional view taken along a line VII-VII of Fig. 7A.
Fig. 8A is a partial side view illustrating inner concave grooves of a rail-side opening portion and a return path-side opening portion of a return guide of a second modification example, and Fig. 8B is a cross-sectional view taken along a line VIII-VIII of Fig. 8A.

### DESCRIPTION OF EMBODIMENTS

Hereinafter, an embodiment of a linear guide according to the present invention will be described in detail based on the drawings. The present invention is not limited to the embodiment described below, and can be arbitrarily modified without departing from the gist of the present invention.

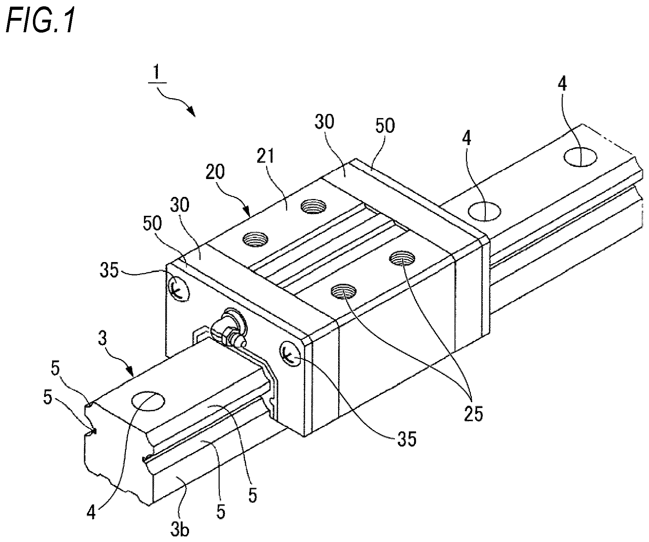

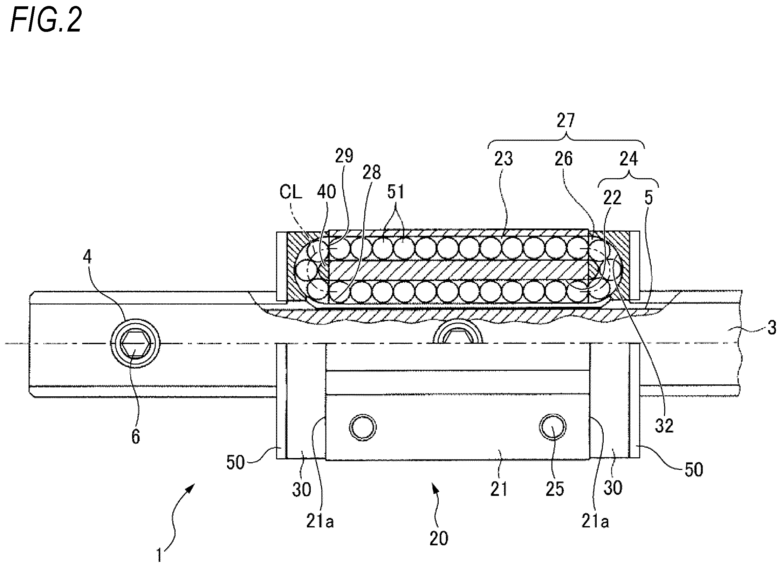

As illustrated in Figs. 1 and 2, a linear guide 1 of the embodiment includes a guide rail 3 extending in one direction, and a slider 20 having a C-shaped cross section that is attached to straddle the guide rail 3 and is movable in an axial direction with respect to the guide rail 3. In the embodiment, a front-rear direction indicates a direction in which the slider 20 moves along the guide rail 3, and a left-right direction indicates a width direction of the slider 20 attached to the guide rail 3.

The guide rail 3 is made of metal, and two rail-side rolling grooves 5 are formed along the axial direction of the guide rail 3 on each of the left and right side surfaces 3b. The guide rail 3 has a plurality of rail attachment holes 4 penetrating in a height direction of the guide rail 3, and rail fixing bolts 6 for fixing the guide rail 3 to an attachment target surface (not illustrated) are inserted into the rail attachment holes 4.

As illustrated in Figs. 1 to 4, the slider 20 includes a slider body 21 including sleeve portions on both left and right sides of the guide rail 3, a pair of end caps 30, 30 attached to both ends of the slider body 21 in a front-rear direction, return guides 40, 40 assembled in sets with each of the end caps 30, 30, and a pair of side seals 50, 50 for sealing gaps between the guide rail 3 and the end caps 30, 30.

The slider body 21 includes slider-side rolling grooves 22 and ball return paths 23 on both left and right sides, respectively. The slider-side rolling grooves 22 are formed on inner surfaces of both sleeve portions of the slider body 21 and face the rail-side rolling grooves 5. A load rolling path 24 is formed by the rail-side rolling groove 5 and the slider-side rolling groove 22. The ball return paths 23 are formed by holes that penetrate thick parts of both sleeve portions in an axial direction of the guide rail 3. An upper surface of the slider body 21 is provided with a driven body fixing screw insertion hole 25 for inserting a bolt for fixing a driven body such as a table to the slider 20.

The end caps 30 that are respectively joined to front and rear ends of the slider body 21 are, for example, injection-molded products made of a synthetic resin material, and are formed to have a C-shaped cross section like the slider body 21. The end cap 30 is provided with a plurality of mounting screw insertion holes 34, and the end cap 30 is fastened to an end surface 21a of the slider body 21 together with the side seal 50 by mounting screws 35 inserted through the mounting screw insertion holes 34.

In each of left and right sleeve portions 31 of the end cap 30, outer concave grooves 32, which are semi-disc-shaped concave portions, are formed in two upper and lower stages on an abutment surface 31a side with respect to the front and rear end surfaces 21a of the slider body 21, and a fitting concave portion 33 is formed at a position that crosses center portions in a width direction of the upper and lower two-stage outer concave grooves 32.

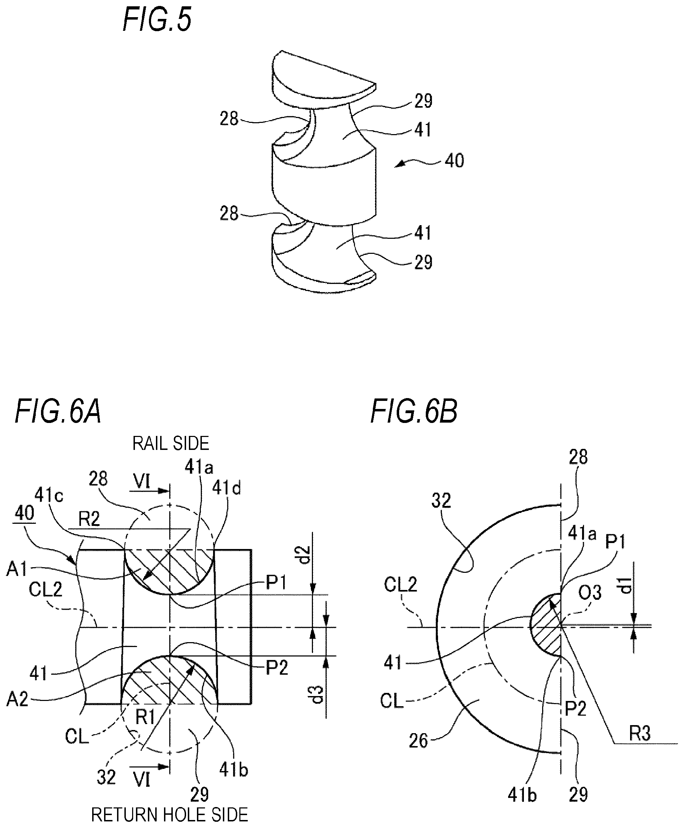

Referring also to Fig. 5, the return guide 40 is formed in a semi-cylindrical shape. On an outer diameter surface of the return guide 40, inner concave grooves 41, which are semi-disk-shaped concave portions that serve as guide surfaces for balls 51, are continuously formed in two upper and lower stages in a circumferential direction.

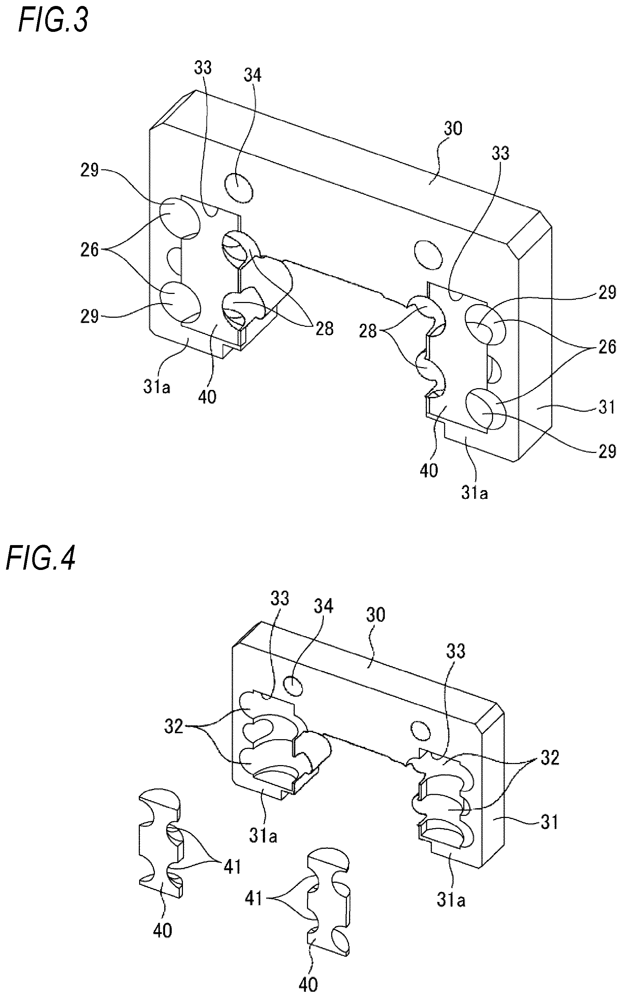

As illustrated in Figs. 3 and 4, the return guide 40 is attached to the end cap 30 by fitting into the fitting concave portion 33 with an outer diameter surface on which the inner concave groove 41 is formed inside. Therefore, the inner concave grooves 41 of the return guides 40 and the outer concave grooves 32 of the end cap 30 form semi-doughnut-shaped (curved tubular) direction changing paths 26 in two upper and lower stages on the left and right sides of a back surface of the end cap 30.

The return guide 40 is manufactured by injection molding or 3D printing of resin and metal. As the resin material, engineering plastics such as polyacetal, polyamide, peak material, and the like can be considered, and glass fiber or carbon fiber may be contained in an amount of about 2% to 50% for reinforcement. As the metal material, austenitic stainless steel such as SUS304 and SUS316 can be considered. It is also possible to form by cutting a resin material or a metal material.

As a result, the direction changing path 26 connects the load rolling path 24 and the ball return path 23, and the load rolling path 24, the ball return path 23, and the direction changing path 26 form a ball rolling path 27 (see Fig. 2). For example, a plurality of balls 51 made of steel are loaded in the ball rolling path 27, and the plurality of balls 51 endlessly circulate while rolling in the ball rolling path 27 as the slider 20 moves relatively.

Next, the direction changing path 26, especially the inner concave groove 41 of the return guide 40 will be described in detail with reference to Fig. 6A and Fig. 6B. Of two opening portions of the direction changing path 26, one opening on a side connected to the load rolling path 24 is defined as a rail-side opening portion 28, and the other opening portion on a side connected to the ball return path 23 is defined as a return path-side opening portion 29. In Figs. 3 to 5, the direction changing path 26 has different heights in an up-down direction between the rail-side opening portion 28 and the return path-side opening portion 29. However, in Figs. 6 to 8, for the sake of simplicity, it is assumed that the direction changing path 26 has same heights.

As illustrated in FIG. 6A, the inner concave groove 41 of the return guide 40 has different cross-sectional shapes on a plane perpendicular to a central axis CL of the direction changing path 26 between the rail-side opening portion 28 and the return path-side opening portion 29. That is, each of both inner concave groove 41a of the rail-side opening portion 28 and inner concave groove 41b of the return path-side opening portion 29 has a single arc shape, but a radius R1 of the inner concave groove 41b of the return path-side opening portion 29 is larger than a radius R2 of the inner concave groove 41a of the rail-side opening portion 28.

In any cross section parallel to a plane along the central axis CL of the direction changing path 26, the inner concave groove 41 is formed to connect points of the inner concave grooves 41a and 41b at the opening portions 28 and 29 with a single arc.

For example, as illustrated in Fig. 6B, in a cross section (VI-VI cross section) passing through the central axis CL of the direction changing path 26, a groove bottom of the inner concave groove 41 smoothly continues a point P1 of the inner concave groove 41a of the rail-side opening portion 28 and a point P2 of the inner concave groove 41b of the return path-side opening portion 29 in a single arc with a radius R3.

In a width direction of the return guide 40, when a distance from a center line CL2 to a groove bottom of the inner concave groove 41a of the rail-side opening portion 28 is set as d2, and a distance from the center line CL2 to a groove bottom of the inner concave groove 41b of the return path-side opening portion 29 is set as d3, R3 = (d2 + d3) / 2, and a center O3 of an arc with the radius R3 is offset toward the rail-side opening portion 28 by d1 = (d3 - d2) /2.

In a portion larger than the inner concave portion 41a of the rail-side opening portion 28 in any cross-section parallel to a plane along the central axis CL of the direction changing path 26, a point of the inner concave groove 41 closest to the rail-side opening portion 28 and a point of the inner concave groove 41b of the return path-side opening portion 29 are connected by a single arc.

Thus, the inner concave groove 41a of the rail-side opening portion 28 and the inner concave groove 41b of the return path-side opening portion 29 are each formed in an arc shape in which the radius R1 of the inner concave groove 41b of the return path-side opening portion 29 is larger than the radius R2 of the inner concave groove 41a of the rail-side opening portion 28. In any cross section parallel to the plane along the central axis CL of the direction changing path 26, the inner concave groove 41 is formed to connect points of the inner concave groove 41 at both opening portions 28 and 29 with a single arc. As a result, a hole diameter of the ball return path 23 can be increased, making it easier to machine the ball return path 23, so even in a long slider, straightness of the ball return path 23 is improved, and thus stable performance of the ball 51 can be maintained. Since the inner concave groove 41a of the rail-side opening portion 28 is formed by the arc with the radius R2 smaller than the radius R1, it is possible to reduce a clearance in the ball rolling path 27 near an entrance/exit opening.

In the cross-sectional shape on the plane perpendicular to the central axis CL of the direction changing path 26, when looking at a cross-sectional area formed by connecting both ends 41c and 41d of the inner concave groove, a cross-sectional area A2 of the return path-side opening portion 29 is greater than a cross-sectional area A1 of the rail-side opening portion 28.

The inner concave groove 41 is formed such that the cross-sectional area increases smoothly from the rail-side opening portion 28 to the return path-side opening portion 29.

In the outer concave groove 32, the rail-side opening portion 28 and the return path-side opening portion 29 may have different shapes to be continuous with the inner concave groove 41, or a single arc of return path-side opening portion 29 may be formed over the direction changing path 26.

The linear guide 1 configured as such can maintain stable operating performance while maximizing the hole diameter of the ball return path 23.

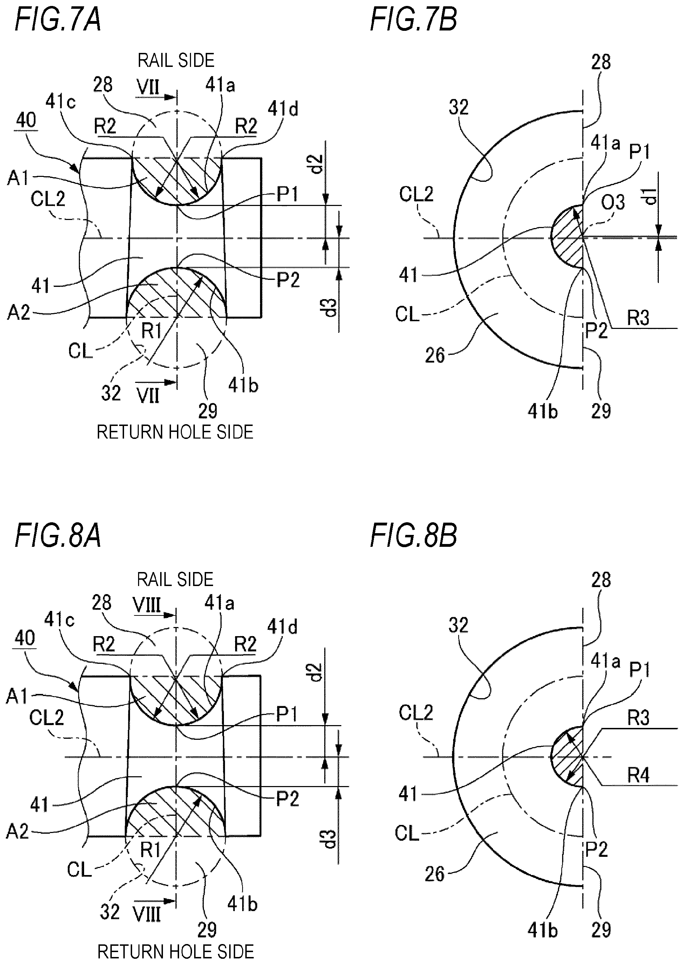

Each modification example of the return guide 40 will be described below with reference to Figs. 7 and 8.

### First Modification Example

As illustrated in FIG. 7A, in the inner concave groove 41 of the return guide 40 of a first modification example, in the cross section along the plane perpendicular to the central axis CL of the direction changing path 26, the inner concave groove 41a of the rail-side opening portion 28 has a gothic arch shape with a radius R2, and the inner concave groove 41b of the return path-side opening portion 29 is formed of a single arc with a radius R1. The radius R1 of the inner concave groove 41b of the return path-side opening portion 29 is larger than the radius R2 of each inner concave groove 41a of the rail-side opening portion 28.

In any cross section parallel to the plane along the central axis CL of the direction changing path 26, the inner concave groove 41 is formed to connect points of the inner concave grooves 41a and 41b at both opening portions 28 and 29 with a single arc.

For example, as illustrated in Fig. 7B, in a cross-section (VII-VII cross section) passing through the central axis CL of the direction changing path 26, a groove bottom of the inner concave groove 41 smoothly continues a point P1 of a gothic arch shape with the radius R2 of the inner concave groove 41a of the rail-side opening portion 28 and a point P2 of an arc shape with the radius R1 of the inner concave groove 41b of the return path-side opening portion 29 in a single arc with a radius R3. The shape of the inner concave groove 41 changes smoothly in a circumferential direction of the inner concave groove 41 from the gothic arch shape of the inner concave groove 41b to the arc shape of the inner concave groove 41a.

In the width direction of the return guide 40, when the distance from the center line CL2 to the groove bottom of the inner concave groove 41a of the rail-side opening portion 28 is set as d2, and the distance from the center line CL2 to the groove bottom of the inner concave groove 41b of the return path-side opening portion 29 is set as d3, R3 = (d2 + d3) / 2, and the center O3 of the arc with the radius R3 is offset toward the rail-side opening portion 28 by d1 = (d3 - d2) / 2.

Here, in the cross-sectional shape on the plane perpendicular to the central axis CL of the direction changing path 26, when looking at the cross-sectional area formed by connecting both ends 41c and 41d of the inner concave groove, the cross-sectional area A2 of the return path-side opening portion 29 is greater than the cross-sectional area A1 of the rail-side opening portion 28.

The inner concave groove 41 is formed such that the cross-sectional area increases smoothly from the rail-side opening portion 28 to the return path-side opening portion 29.

When the rail-side rolling groove 5 of the guide rail 3 has a gothic arch shape, the inner concave groove 41a of the rail-side opening portion 28 is also preferably in the shape of a gothic arch, which reduces a step between parts and allows the balls 51 to circulate more smoothly. Thus, the direction changing path 26 is smoothly connected by the arc with the radius R3, so the ball 51 can move stably.

Patent Literature 3 also proposes simultaneous grinding of the direction changing path and the ball groove. However, in the case of simultaneous grinding, the direction changing path itself will have an inflection point of the curved surface shape part and the simultaneous grinding part, so there is concern that burrs or the like may occur near the inflection point and cause malfunction. In the linear guide 1 of the modification example, there is no such problem, and thus the step between parts can be reduced.

### Second Modification Example

As illustrated in Fig. 8A, in the return guide 40 of a second modification example, in a cross section on a plane perpendicular to the central axis CL of the direction changing path 26, similarly to the linear guide of the first modification example, the inner concave groove 41a of the rail-side opening portion 28 has a gothic arch shape with a radius R2, and the inner concave groove 41b of the return path-side opening portion 29 is formed from a single arc with a radius R1. The radius R1 of the inner concave groove 41b of the return path-side opening portion 29 is larger than each radius R2 of the inner concave groove 41a of the rail-side opening portion 28.

In any cross section parallel to the plane along the central axis CL of the direction changing path 26, the inner concave groove 41 is formed so that points of the inner concave grooves 41a and 41b at both opening portions 28 and 29 are smoothly connected by two arcs 42 and 43.

For example, as illustrated in Fig. 8B, in a cross section (VIII-VIII cross section) passing through the central axis CL of the direction changing path 26, a groove bottom of the inner concave groove 41 smoothly continues a point P1 of a gothic arch shape with the radius R2 of the inner concave groove 41a of the rail-side opening portion 28 and a point P2 of the radius R1 of the inner concave groove 41b of the return path-side opening portion 29 in two arcs 42 and 43 with radius R3 and radius R4.

Here, the arc 42 with the radius R3 is continuously connected in a single arc shape of the inner concave groove 41b of the return path-side opening portion 29. On the other hand, the arc 43 with the radius R4 is continuously connected while changing (spreading) from the gothic arch shape with the radius R2 of the inner concave groove 41a of the rail-side opening portion 28, and the arc 42 with the radius R3 and the arc 43 with the radius R4 smoothly connect the single arc and the gothic arch shape at a connecting portion.

Here, in the cross-sectional shape on the plane perpendicular to the central axis CL of the direction changing path 26, when looking at the cross-sectional area formed by connecting both ends 41c and 41d of the inner concave groove, the cross-sectional area A2 of the return path-side opening portion 29 is greater than the cross-sectional area A1 of the rail-side opening portion 28.

The inner concave groove 41 is formed such that the cross-sectional area increases smoothly from the rail-side opening portion 28 to the return path-side opening portion 29.

As in the second modification example, a mode in which the inner concave groove 41a of the return path-side opening portion 29 and the inner concave groove 41b of the rail-side opening portion 28 are smoothly connected by two arcs 42 and 43 in a cross section passing through the central axis CL of the direction changing path 26 is also applicable to the case where the inner concave groove 41a of the return path-side opening portion 29 and the inner concave groove 41b of the rail-side opening portion 28 are of a single arc shape, as in the above embodiment.

This application is based on a Japanese patent application (Japanese Patent Application No. 2021-053614) filed on March 26, 2021.

### REFERENCE SIGNS LIST

1: linear guide
3: guide rail
3b: left and right side surfaces
5: rail-side rolling groove
20: slider
21: slider body
21a: end surface (side end surface in movement direction of slider)
22: slider-side rolling groove
23: ball return path
24: load rolling path
26: direction changing path
27: ball rolling path
28: rail-side opening portion
29: return path-side opening portion
30: end cap
32: outer concave groove
40: return guide
41, 41a, 41b: inner concave groove
51: ball
CL: central axis of direction changing path
R1: radius of inner concave groove of return path-side opening portion
R2: radius of inner concave groove of rail-side opening portion

## Claims

1. A linear guide (1) comprising:
a guide rail (3) including rail-side rolling grooves (5) extending axially on a side surface (3b);
a slider (20) that is attached to straddle the guide rail (3), includes slider-side rolling grooves (22) forming a load rolling path (24) together with the rail-side rolling grooves (5) and a ball return path (23) formed substantially parallel to the slider-side rolling grooves (22), and is axially movable relative to the guide rail (3);
an end cap (30) fixed to a movement direction side end surface of the slider (20) and having an outer concave groove (32) defining an outer peripheral surface of a direction changing path (26) connecting the load rolling path (24) and the ball return path (23);
a return guide (40) interposed between the slider (20) and the end cap (30) and having an inner concave groove (41) defining an inner peripheral surface of the direction changing path (26); and
a plurality of balls (51) that roll in the load rolling path (24), the ball return path (23), and the direction changing path (26) as the slider (20) moves, wherein
when of two opening portions of the direction changing path (26), an opening portion on a side connected to the load rolling path (24) is defined as a rail-side opening portion (28), and an opening portion on a side connected to the ball return path (23) is defined as a return path-side opening portion (29), in the inner concave groove (41), the rail-side opening portion (28) and the return path-side opening portion (29) have different cross-sectional shapes on a plane perpendicular to a central axis (CL) of the direction changing path (26), and in any cross section parallel to a plane along the central axis (CL) of the direction changing path (26), the inner concave groove (41) is formed so that points (P1, P2) of the inner concave groove (41) at the two opening portions are connected by a single arc or a plurality of smoothly continuous arcs, **characterized in that**
in a cross-sectional shape on the plane perpendicular to the central axis (CL) of the direction changing path (26), a cross-sectional area formed by connecting both ends (41c, 41d) of the inner concave groove (41) is larger in the return path-side opening portion (29) than in the rail-side opening portion (28), and
the inner concave groove (41) is formed such that the cross-sectional area increases smoothly from the rail-side opening portion (28) to the return path-side opening portion (29).

2. The linear guide (1) according to claim 1, wherein, in a cross section on a plane perpendicular to the central axis (CL) of the direction changing path (26), the inner concave groove (41a) of the rail-side opening portion (28) and the inner concave groove (41b) of the return path-side opening portion (29) are each formed in an arc shape in which a radius R1 of the inner concave groove (41b) of the return path-side opening portion (29) is larger than a radius R2 of the inner concave groove (41a) of the rail-side opening portion (28).

3. The linear guide (1) according to claim 1, wherein, in a cross section on a plane perpendicular to the central axis (CL) of the direction changing path (26), the inner concave groove (41a) of the rail-side opening portion (28) has a gothic arch shape, and the inner concave groove (41b) of the return path-side opening portion (29) has an arc shape.

## Patentansprüche

1. Linearführung (1), die umfasst:
eine Führungsschiene (3), die schienenseitige Laufrillen (5) aufweist, die sich axial an einer Seitenfläche (3b) erstrecken;
einen Schlitten (20), der so installiert ist, dass er die Führungsschiene (3) überspannt, schlittenseitige Laufrillen (22) einschließt, die zusammen mit den schienenseitigen Laufrillen (5) eine lasttragende Laufbahn (24) sowie eine Kugel-Rücklaufbahn (23) bilden, die im Wesentlichen parallel zu den schlittenseitigen Laufrillen (22) ausgebildet ist, und der relativ zu der Führungsschiene (3) axial bewegt werden kann;
eine Endkappe (30), die an einer Endfläche des Schlittens (20) an einer Seite in Bewegungsrichtung befestigt ist und eine äußere konkave Nut (32) hat, die eine Außenumfangsfläche eines Kugelrückführungsweges (26) bildet, der die lasttragende Laufbahn (24) und die Kugel-Rücklaufbahn (23) verbindet;
eine Kugelrückführung (40), die zwischen dem Schlitten (20) und der Endkappe (30)angeordnet ist und eine innere konkave Nut (41) hat, die eine Innenumfangsfläche des Kugelrückführungsweges (26) bildet; sowie
eine Vielzahl von Kugeln (51), die auf der lasttragenden Laufbahn (24), der Kugel-Rücklaufbahn (23) sowie dem Kugelrückführungsweg (26) rollen, wenn sich der Schlitten (20) bewegt, wobei
wenn von zwei Öffnungsabschnitten des Kugelrückführungsweges (26) ein Öffnungsabschnitt an einer mit der lasttragenden Laufbahn (24) verbundenen Seite als ein schienenseitiger Öffnungsabschnitt (28) definiert ist, und ein Öffnungsabschnitt an einer mit der Kugel-Rücklaufbahn (23) verbundenen Seite als ein rücklaufbahnseitiger Öffnungsabschnitt (29) definiert ist, in der inneren konkaven Nut (41) der schienenseitige Öffnungsabschnitt (28) und der rücklaufbahnseitige Öffnungsabschnitt (29) unterschiedliche Querschnittsformen in einer Ebene senkrecht zu einer Mittelachse (CL) des Kugelrückführungsweges (26) haben, und in jedem beliebigen Querschnitt parallel zu einer Ebene entlang der Mittelachse (CL) des Kugelrückführungsweges (26) die innere konkave Nut (41) so ausgebildet ist, dass Punkte (P1, P2) der inneren konkaven Nut (41) an den zwei Öffnungsabschnitten über einen einzelnen Kreisbogen oder eine Vielzahl stufenlos durchgehender Kreisbögen verbunden sind,
**dadurch gekennzeichnet, dass**
in einer Querschnittsform in der Ebene senkrecht zu der Mittelachse (CL) des Kugelrückführungsweges (26) eine Querschnittsfläche, die ausgebildet wird, indem beide Enden (41c, 41d) der inneren konkaven Nut (41) verbunden werden, in dem rücklaufbahnseitigen Öffnungsabschnitt (29) größer ist als in dem schienenseitigen Öffnungsabschnitt (28), und
die innere konkave Nut (41) so ausgebildet ist, dass die Querschnittsfläche stufenlos von dem schienenseitigen Öffnungsabschnitt (28) zu dem rücklaufbahnseitigen Öffnungsabschnitt (29) zunimmt.

2. Linearführung (1) nach Anspruch 1, wobei in einem Querschnitt in einer Ebene senkrecht zu der Mittelachse (CL) des Kugelrückführungsweges (26) die innere konkave Nut (41a) des schienenseitigen Öffnungsabschnitts (28) und die innere konkave Nut (41b) des rücklaufbahnseitigen Öffnungsabschnitts (29) jeweils in einer Kreisbogenform ausgebildet sind, bei der ein Radius R1 der inneren konkaven Nut (41) des rücklaufbahnseitigen Öffnungsabschnitts (29) größer ist als ein Radius R2 der inneren konkaven Nut (41a) des schienenseitigen Öffnungsabschnitts (28).

3. Linearführung (1) nach Anspruch 1, wobei in einem Querschnitt in einer Ebene senkrecht zu der Mittelachse (CL) des Kugelrückführungsweges (26) die innere konkave Nut (41a) des schienenseitigen Öffnungsabschnitts (28) eine Spitzbogenform hat und die innere konkave Nut (41b) des rücklaufbahnseitigen Öffnungsabschnitts (29) eine Kreisbogenform hat.

## Revendications

1. Guide linéaire (1) comprenant :
un rail de guidage (3) comportant des rainures de roulement côté rail (5) s'étendant axialement sur une surface latérale (3b) ;
un coulisseau (20) qui est attaché de manière à enfourcher le rail de guidage (3), comporte des rainures de roulement côté coulisseau (22) formant, conjointement avec les rainures de roulement côté rail (5), un chemin de roulement porteur (24) et un chemin de retour de billes (23) formé sensiblement parallèlement aux rainures de roulement côté coulisseau (22), et est mobile axialement par rapport au rail de guidage (3) ;
un capuchon d'extrémité (30) fixé à une surface d'extrémité côté direction de déplacement du coulisseau (20), et comportant une rainure concave externe (32) définissant une surface périphérique externe d'un chemin de changement de direction (26) reliant le chemin de roulement porteur (24) et le chemin de retour de billes (23) ;
un guide de retour (40) interposé entre le coulisseau (20) et le capuchon d'extrémité (30), et comportant une rainure concave interne (41) définissant une surface périphérique interne du chemin de changement de direction (26) ; et
une pluralité de billes (51) qui roulent dans le chemin de roulement porteur (24), le chemin de retour de billes (23) et le chemin de changement de direction (26) lorsque le coulisseau (20) se déplace, dans lequel
lorsque, parmi deux parties d'ouverture du chemin de changement de direction (26), une partie d'ouverture sur un côté relié au chemin de roulement porteur (24) est définie comme une partie d'ouverture côté rail (28), et une partie d'ouverture sur un côté relié au chemin de retour de billes (23) est définie comme une partie d'ouverture côté chemin de retour (29), dans la rainure concave interne (41), la partie d'ouverture côté rail (28) et la partie d'ouverture côté chemin de retour (29) présentent des formes en coupe transversale différentes sur un plan perpendiculaire à un axe central (CL) du chemin de changement de direction (26), et, dans toute coupe transversale parallèle à un plan le long de l'axe central (CL) du chemin de changement de direction (26), la rainure concave interne (41) est formée de sorte que des points (P1, P2) de la rainure concave interne (41) au niveau des deux parties d'ouverture sont reliés par un arc unique ou par une pluralité d'arcs continus de manière régulière, **caractérisé en ce que** dans une forme en coupe transversale sur le plan perpendiculaire à l'axe central (CL) du chemin de changement de direction (26), une superficie en coupe transversale formée en reliant les deux extrémités (41c, 41d) de la rainure concave interne (41) est plus grande dans la partie d'ouverture côté chemin de retour (29) que dans la partie d'ouverture côté rail (28), et
la rainure concave interne (41) est formée de sorte que la superficie en coupe transversale augmente de manière régulière de la partie d'ouverture côté rail (28) vers la partie d'ouverture côté chemin de retour (29).

2. Guide linéaire (1) selon la revendication 1, dans lequel, dans une coupe transversale sur un plan perpendiculaire à l'axe central (CL) du chemin de changement de direction (26), la rainure concave interne (41a) de la partie d'ouverture côté rail (28) et la rainure concave interne (41b) de la partie d'ouverture côté chemin de retour (29) sont chacune formées selon une forme d'arc, un rayon R1 de la rainure concave interne (41b) de la partie d'ouverture côté chemin de retour (29) étant supérieur à un rayon R2 de la rainure concave interne (41a) de la partie d'ouverture côté rail (28).

3. Guide linéaire (1) selon la revendication 1, dans lequel, dans une coupe transversale sur un plan perpendiculaire à l'axe central (CL) du chemin de changement de direction (26), la rainure concave interne (41a) de la partie d'ouverture côté rail (28) présente une forme d'arc gothique, et la rainure concave interne (41b) de la partie d'ouverture côté chemin de retour (29) présente une forme d'arc.
